# EUROPEAN PATENT SPECIFICATION

(11) **EP 0 700 256 B1**
(45) Date of publication and mention of the grant of the patent: **09.05.2001**
(21) Application number: 95907798.3
(22) Date of filing: 07.02.1995
(51) Int. Cl.: A23L 2/02, A23L 2/52

(54) **A NATURAL AND HEALTHY JUICE**
EIN NATÜRLICHER UND GESUNDER SAFT
JUS NATUREL ET SAIN

(30) Priority: 08.02.1994 GR 94100062
(43) Date of publication of application: 13.03.1996
(73) Proprietor: VIORYL CHEMICAL AND AGRICULTURAL INDUSTRY RESEARCH S.A., 145 64 Kifissia (GR)
(72) Inventor: STAVROPOULOS, Th. Alexandros, GR-154 52 Pal. Psihico (GR)
(74) Representative: Masoulas, Athanasios V.
(86) International application number: GR9500002
(87) International publication number: WO9521542

(56) References cited:
- EP-A- 0 285 676
- EP-A- 0 319 726
- WO-A-90/01272
- FR-A- 994 449
- FR-A- 2 547 167
- FR-A- 2 567 371
- US-A- 5 085 875
- DATABASE WPI Section Ch, Week 8705 Derwent Publications Ltd., London, GB; Class D13, AN 87-036281 & SU,A,1 238 750 (A.F.FAN-YUNG ET AL.) , 23 June 1986
- DATABASE WPI Section Ch, Week 8425 Derwent Publications Ltd., London, GB; Class D13, AN 84-155407 & JP,A,59 082 072 (NIPPON SEIFUN) , 11 May 1984
- DATABASE WPI Section Ch, Week 8308 Derwent Publications Ltd., London, GB; Class B04, AN 83-18306k & JP,A,58 005 172 (MIYASAKA KORYO) , 12 January 1983
- DATABASE WPI Section Ch, Week 9224 Derwent Publications Ltd., London, GB; Class D13, AN 92-361378 & JP,A,04 262 767 (MEIJI SEIKA KAISHA) , 18 September 1992

## Description

The present invention concerns a new and tasty drink obtainable by mixing of exclusive natural ingredients (fruit juices, vegetable juices, marine extracts, yeast , glycyrrhiza, wheat germ, non alcoholic wine concentrates, condiments e.t.c.) which supply the consumer with necessary food elements (vitamins, inorganic salts, trace compounds, fibbers e.t.c.) for healthy nutrition according to the latest scientific results.

Refreshments, soups and sauces that consist of either squeezed fruit or vegetables or juices enriched in vitamins and other synthetic substances are encountered in the market. Dehydrates or concentrates of the above can also be found.

With reference to the recent alimentation rules and scientific conclusions, these products do not contain but a part of the necessary constituents for a balanced nutrition. All the more these products cannot be called natural since they contain synthetic vitamins.

Healthy food supplements can also be found in the form of tablets (e.g. vitamins, trace elements, yeast e.t.c.).

It is known that substances as vitamins, inorganic salts and other trace elements are necessary for the regular functioning of the human organism.

Late medical research has proved that the above substances have a much larger contribution to good health than thought till now, mainly for the prevention of heart diseases and cancer.

Recent year researches have shown that vitamins as E, C, β-carotene (precursor of vitamin A), trace elements as selenium and compounds as flavonoids have an antioxidant activity. The antioxidant compounds deactivate the free radicals which are formed either naturally by a category of catabolizing cells, the phagocytes, or by the action of industrial pollutants, smoking and the use of highly unsaturated fats.

Among the results of the free radical's action is the death of the cells and gradually of the tissues (Davis S.W. et. al. (1952) Br. Heart J. 69. 114-120) as well as the oxidation of blood factors as LDL (Low Density Lipoprotein) which, in the oxidized form promotes the development of atherogenesis in arteries and leads to heart diseases. (Ross R. (1993) Nature 363, 801-809).

The uptake of vitamins E,C and β-carotene (precursor of vitamin A) through nutrition, as a preventive means against heart diseases, is well documented by recent research ( Witztum J.L. 1993 Br. Heart J. 69 S12-S18). Vitamin E is the main factor of the defensive system against oxidations that may have harmful effects. It can be taken from the wheat germ which is particularly rich in this vitamin. In this defensive system vitamin E is assisted by vitamin C which is abundant in citrus fruit and selenium that acts as a coenzyme factor and is found among others in crustacean like oysters. (Hoekstra W.G. (1974), Trace Elements Metabolism in Animals, 2, Proceedings of the second International Symposium, University Park Press, Baltimore, Md, 61-77).

Other researches suggest that wine, particularly red wine, has a protective profile against heart diseases. Responsible for this action are the flavonoids that also have antioxidant properties (Klatsky et al (1992) Ann. Inter. Med. T12.646).

It has also been settled that antioxidant substances contribute to the protection against cancer (Iwasaki R. (1992), Fragrance J 20(5), 93-95 and Yoshkawa T. (1992), Fragrance J 20 (5), 55-58). Glycyrrhizine - the main water soluble constituent of glycyrrhiza (or licorice) - has also anticancerigenic properties (Mashida H. (1990), Jpn. J. Exp. Med. 60 (2), 67-71 and Tanaka M. (1991) Kyoto-furitsu Ika Dalgaku Zasshi, 100 (12), 1139-1146. Its use as a sweetener is known since antiquity.

It has been postulated that, due to cholesterol reduction in blood , soluble fibbers develop a protective profile against heart diseases. They also show anti-colon cancerigenic properties (National Research Council (1989), Diet and Health : Implications for reducing chronic disease risk, National Academy Press, Washington D.C.).

Another important substance is Taurine, which is obtained mainly from oysters. Its action focuses upon membrane protection through the binding of toxic compounds like oxidants and secondary cholic acids (Gaul G.E. Wright C.E (1986), Energy and Protein Needs during infancy, Bristol - Myers Nutrition Symposia, 4, 87-97).

Moreover the importance of the nutrient availability of the above substances needs to be mentioned. With the term " nutrient availability " one defines the percentage of a certain food ingredient that is absorbed and metabolized by the organism. The natural vitamins are absorbed a lower rate compared to the synthetic ones, thus showing a higher availability. For this reason yeast remains a very attractive means of highly available vitamins and trace elements (especially the B-complex) ( Vinson J.A. Bose P. Lemoine L. Hslao K. (1989), Nutrient availability: Chemical and Biological aspects, Ed. Southgate D. , Johnson I., Fewwick G.R., 125)

This new product is made up by the mixing of exclusively natural substances that offer the consumer, in a supplementary fashion, all the important constituents of a balanced diet. (vitamins, minerals, trace elements and soluble fibers). Up to date no such composition has been presented: that is one containing a such exclusive combination of natural ingredients : fruit juices, vegetable juices marine extracts, licorice, yeast, wheat germ and wine concentrate. It is practically impossible for an average consumer to find and acquire all these nutrients together, not only due to commercial availability drawbacks but also due to a certain lack of specific knowledge. Last but not least, the uptake of these substances independently (through various food) would forcibly be accompanied by a higher than usual calorie consumption responsible for all the known and harmful side effects (obesity, alatosis, etc).

It is obvious from the description of this patent that the natural extracts, which are contained in the present product, are constituents that are hard to find and do not exist in a wide range.

The product which is described here is presented under the form of a tasty drink.

The juices to be used for this product are either frozen natural or condensed, on condition that they fulfil all the dietetic and organoleptic requirements.

The invention is as defined in the claims.

## Claims

1. Product that is a tasty drink obtainable by mixing of fruit juices, vegetable juices, marine extracts, yeast, glycyrrhiza (licorice), non alcoholic red wine concentrates, wheat germ, condiments and offers the consumer necessary ingredients (vitamins, inorganic salts, trace elements, dietetic fibres etc) for a healthy nutrition that comes exclusively out of natural sources.

2. Product according to claim 1, offering the consumer β-carotene (precursor of vitamin A ) from 5500µg up to 8500µg per 100ml of product from natural tomato, carrot, orange, lettuce juice or other natural source.

3. Product according to claims 1 and 2, offering the consumer vitamin A from 50µg up to 65µg per 100ml from natural spinach juice or other natural source.

4. Product according to claims 1,2 and 3 offering the consumer vitamin C from 30mg up to 60mg per 100ml from orange, tomato, carrot, lettuce, spinach, beetroot juice, celery, oyster and yeast extracts or other natural source.

5. Product according to claims 1,2,3 and 4 offering the consumer vitamin E from 7 up to 10mg per 100 ml from natural tomato juice, carrot, lettuce, orange, celery, wheat germ natural oil or other natural source.

6. Product according to claims 1,2,3,4 and 5 offering the consumer the following trace elements iodine : 1-10µg, fluorine : 0.1-0.4mg, magnesium : 40-60mg, potassium : 450-550mg sodium : 80-95mg, manganese : 3-5mg, calcium : 50-80mg, iron : 1-3mg, phosphorus : 80-100mg, zinc : 0.5-1mg, chromium : 10-30 µg, selenium : 3-10 µg per 100ml from natural juice of tomato, carrot, beetroot, orange, lettuce, celery, spinach, marine extracts or other natural source.

7. Product according to claims 1,2,3,4,5 and 6 offering the consumer fibres from 1g up to 2g per 100ml from natural juice of tomato, carrot, beetroot, orange, lettuce, celery, spinach, yeast or other natural source.

8. Product according to claims 1,2,3,4,5,6 and 7 offering the consumer flavonoids in traces coming from non-alcoholic wine extracts or other natural source.

9. Product according to claims 1,2,3,4,5,6,7 and 8 offering the consumer glycyrrhizine from 2mg up to 10mg per 100ml of product, coming from glycyrrhiza (licorice) solution.

10. Product according to claims 1,2,3,4,5,6,7,8 and 9 offering the consumer taurine from 10mg up to 30mg per 100ml of product, coming from marine (like oysters) extract.

## Patentansprüche

1. Erzeugnis das ein wohlschmeckendes Getränk ist und das aus einem Gemisch von Fruchtsaft, von Gemüsesaft, von Meeresextrakten, von Hefe, von Lakritze, von nichtalkoholische Rotweinkonzentrate, von Getreidekeim, von Würzen besteht und das dem Verbraucher die notwendige Bestandteile (Vitaminen, anorganische Sälze, Oligo - Elemente, Dietfasern usw) für eine gesunde Nahrung liefert, die ausschlisslich aus natürlichen Quellen kommt.

2. Erzeuguis nach dem Anspuch 1, das dem Verbraucher b-Karotene (Vitamine A Vorgänger) von 5500µg bis 8500µg pro 100ml des Produktes liefert, und das von natur- Tomaten, -Karotten, -Orangen, -Lattichsaft oder andere natürliche Quellen kommt.

3. Erzeugnis nach den Ansprüche 1 und 2, das dem Verbraucher Vitamine A von 50µg bis 65µg pro 100ml liefert und das aus natur - Spinatsaft oder andere natürliche Quellen kommt.

4. Ergeugnis nach den Ansprüche 1, 2 oder 3 das dem Verbraucher Vitamine C von 30mg bis 60mg pro 100ml liefert aus Orangen, Tomaten, Karotten, Lattich, Spinat, rote Rübensaft, Sellerie, Austern und Hefeextrakten oder aus andere natürlichen Quellen.

5. Ergeugnis nach den Ansprüche 1, 2, 3 und 4 das dem Verbraucher Vitamine E bis 10mg pro 100ml aus natur - Tomatensaft, Karotten, Lattich, Orangen, Sellerie, Getreidekeimnaturöl oder aus andere natürliche Quellen liefert.

6. Ergeugnis nach den Ansprüche 1, 2, 3,4 und 5 das dem Verbraucher die folgende elementare Spure liefert: Jod: 1-10µg, Fluor: 0,1-0,4mg, Magnesium: 40-60mg, Pottasche: 450-550mg, Natrium: 80-95mg, Mangan: 3-5mg, Kalzium: 50-80mg, Eisen: 1-3mg, Phosphor: 80-100mg, Zink: 0,5-1mg, Chrom: 10-30mg, Selen: 3-10µg pro 100ml aus natur - Tomatensaft, Karotten, rote Rüben, Orangen, Lattich, Sellerie, Spinat, Meeresextrakten oder aus andere natürlichen Quellen.

7. Ergeugnis nach den Ansprüche 1, 2, 3,4,5 und 6 das dem Verbraucher Fasern von 1g bis 2g pro 100ml aus natur - Tomatensaft, Karotten, rote Rüben, Orangen, Lattich, Sellerie, Spinat, Hefe oder aus andere natürlichen Quellen liefert.

8. Ergeugnis nach den Ansprüche 1, 2, 3, 4, 5, 6 und 7 das dem Verbraucher Flavonoiden liefert in Spuren die aus nichtalkoholische Weinextrakten oder andere natürlichen Quellen stammen.

9. Ergeugnis nach den Ansprüche 1, 2, 3, 4, 5, 6, 7 und 8 das dem Verbraucher Glycyrrhizine von 2mg bis 10mg pro 100ml des Produktes liefert, die aus eine Lakritzelösung stammt.

10. Ergeugnis nach den Ansprüche 1, 2, 3, 4, 5, 6, 7, 8 und 9 das dem Verbraucher Taurine von 10mg bis 30mg pro 100ml des Produktes liefert, die aus ein Meeresextrakt (wie aus Austern) stammt.

## Revendications

1. Produit qui est une boisson succulente provenant d' un mélange de jus de fruits, de jus de légumes, d' extraits marins, de réglisse, de concentrés de vin rouge non alcoolisés, de germes de blé et de condiments qui offre au consommateur les ingrédients nécessaires (vitamines, sels minéraux, oligo-éléments, fibres alimentaires diététiques etc) pour une alimentation saine provenant exclusivement de sources naturelles.

2. Produit, selon la revendication 1, qui offre au consommateur le β-carotène (précurseur de la vitamine A) de 5500µg à 8500µg pour 100ml de produit provenant des jus naturel de tomate, orange, laitue, ou d' autre source naturelle.

3. Produit, selon les revendications 1 et 2, qui offre au consommateur la vitamine A de 50µg à 65µg pour 100ml provenant du jus naturel d' épinard ou d' autre source naturelle.

4. Produit, selon les revendications 1, 2 et 3 qui offre au consommateur la vitamine C de 30mg à 60mg pour 100ml provenant d' orange, de tomate, de carotte, de laitue, d' épinard, de jus de betterave, de céléri, ou d' extraits d' huîtres et de levure, ou d' autre source naturelle.

5. Produit, selon les revendications 1, 2, 3, et 4 qui offre au consommateur la vitamine E de 7mg à 10mg pour 100ml provenant du jus naturel de tomate, de carotte, de laitue, d' orange, de céléri, d' huile naturelle de germes de blé, ou d' autre source naturelle.

6. Produit, selon les revendications 1, 2, 3, 4 et 5 qui offre au consommateur les oligo-éléments suivants (iode: 1-10µg, fluore: 0,1-0,4 mg, magnésium: 40-60mg, potassium: 450-550mg, sodium : 80-95mg, manganèse : 3-5 mg, calcium : 50-80 mg, fer : 1-3 mg, phosphore : 80-100 mg, zinc: 0,5-1mg, chrome: 10-30µg, sélénium: 3-10 µg) pour 100ml, provenant de jus naturel de tomate, de carotte, de betterave, d' orange, de laitue, de céléri, d' épinard, d' extraits marins ou d' autre source naturelle.

7. Produit, selon les revendications 1, 2, 3, 4, 5 et 6 qui offre au consommateur des fibres de 1g à 2g pour 100ml provenant de jus naturel de tomate, de carotte, de betterave, d' orange, de laitue, de céléri, d' épinard de levure ou d' autre source naturelle.

8. Produit, selon les revendications 1, 2, 3, 4, 5, 6 et 7 qui offre au consommateur des traces des flavonoïdes provenant d' extraits de vin rouge non alcoolisés ou d' autre source naturelle.

9. Produit, selon les revendications 1, 2, 3, 4, 5, 6, 7 et 8 qui offre au consommateur de glycyrizine de 2mg à 10mg pour 100ml du produit provenant d' une solution de réglisse.

10. Produit, selon les revendications 1, 2, 3, 4, 5, 6, 7, 8 et 9 qui offre au consommateur la taurine de 10mg à 30mg pour 100ml de produit provenant d' extraits marins ( par exemple d' huîtres).
